# EUROPÄISCHE PATENTSCHRIFT

(11) **EP 3 517 486 B1**
(45) Veröffentlichungstag und Bekanntmachung des Hinweises auf die Patenterteilung: **08.03.2023**
(21) Anmeldenummer: 19157800.4
(22) Anmeldetag: 12.01.2017
(51) Int. Cl.: B67D 1/00, B67D 1/08

(54) **KARTUSCHENAUFNAHME FÜR EINE GETRÄNKE- ODER LEBENSMITTELKARTUSCHE**
CARTRIDGE HOLDER FOR A BEVERAGE OR FOOD CARTRIDGE
LOGEMENT DE CARTOUCHE POUR UNE CARTOUCHE DE BOISSON OU DE DENRÉE ALIMENTAIRE

(30) Priorität: 12.01.2016 DE 102016200254; 01.07.2016 DE 102016212012; 01.07.2016 DE 102016212013; 27.09.2016 DE 102016218507; 27.09.2016 DE 102016218509; 29.09.2016 DE 102016218884
(43) Veröffentlichungstag der Anmeldung: 31.07.2019
(62) Teilanmeldung aus: 17700341.5
(73) Patentinhaber: Freezio AG, 8580 Amriswil (CH)
(72) Erfinder: KRÜGER, Marc, 51467 Bergisch Gladbach (DE); EMPL, Günter, 51429 Bergisch Gladbach (DE); FISCHER, Daniel, 8590 Romanshorn (CH)
(74) Vertreter: Loock, Jan Pieter

(56) Entgegenhaltungen:
- EP-A1- 2 017 221
- WO-A2-2006/005401
- US-A- 4 376 496
- US-A- 5 836 482

## Beschreibung

### Stand der Technik

Die Erfindung betrifft eine Kartuschenaufnahme mit einem Verdünnungsmittel- insbesondere Wasserzulauf, einer Mischkammer in der das Verdünnungsmittel und ein Getränke- und/oder Lebensmittelsubstrat gemischt werden und einem Ablauf.

Derartige Kartuschenaufnahmen sind aus dem Stand der Technik, beispielsweise aus EP 2 017 221 A1 und WO 2006/005401 A2, bekannt und werden dafür eingesetzt mittels Kartuschen beispielsweise Kaltgetränken herzustellen. Wichtig ist neben einer guten Hygiene auch eine gute Durchmischung zwischen dem Getränke- und/oder Lebensmittelsubstrat und dem Lösungsmittel, insbesondere Wasser, die in der Kartuschenaufnahme gemischt werden.

### Offenbarung der Erfindung

Es war deshalb die Aufgabe der vorliegenden Erfindung eine Kartuschenaufnahme zur Verfügung zu stellen, die diesen Anforderungen gerecht wird.

Gelöst wird die Ausgabe mit einer Kartuschenaufnahme gemäß Anspruch 1.

Die zu diesem Gegenstand der vorliegenden Erfindung gemachten Ausführungen gelten für die anderen Gegenstände der vorliegenden Erfindung gleichermaßen und umgekehrt.

Die vorliegende Erfindung betrifft eine Kartuschenaufnahme, die reversibel oder irreversibel eine Kartusche insbesondere teilweise aufnimmt. Die Kartusche hat einen Hohlraum, in dem sich eine Getränke- und/oder Lebensmittelsubstanz befindet und die vor der Getränke- und/oder Lebensmittelherstellung hermetisch verschlossen ist. Zur Herstellung des Getränks und/oder Lebensmittels wird die Kartusche dann geöffnet, insbesondere aufgestochen, und das Substrat läuft/strömt in eine Mischkammer der Kartuschenaufnahme, die auch über einen Lösungsmittel-, insbesondere Wasserzulauf, verfügt, das mit dem Substrat gemischt wird, um das fertige Getränk oder Lebensmittel zu erzeugen, das durch einen ebenfalls an der Kartuschenaufnahme vorgesehenen Ablauf aus der Mischkammer rausläuft. Der Volumenstrom des Lösungsmittels ist dabei in der Regel wesentlich größer als der Volumenstrom des Substrats.

Vorzugsweise ist der Strömungsquerschnitt, d.h. der Querschnitt, der für Strömung der Flüssigkeit, insbesondere des Lösungsmittelstroms und/oder des Gemischs aus Lösungsmittel und Substrat zur Verfügung steht, nun so vorgesehen, dass er sich bezogen auf die Strömungsrichtung des Lösungsmittels die Strömungsgeschwindigkeit zunächst verlangsamt und dann wieder beschleunigt. Die Beschleunigung, die durch eine Strömungsquerschnittsverengung erreicht wird, findet möglichst statt, nachdem das Lösungsmittel und das Substrat vermischt worden sind.

Der jeweilige Übergang zwischen dem Bereich mit erweitertem Strömungsquerschnitt und den Bereichen mit verengtem Strömungsquerschnitt wird durch den Verlauf der Wandung der Mischkammer vorgegeben. Die Wandung kann hierfür einen gekrümmten oder abgestuften bzw. eckigen Verlauf in den Übergangsbereichen aufweisen.

Gemäß einem weiteren bevorzugten Gegenstand der vorliegenden Erfindung weist die Mischkammer eine Ausbuchtung auf.

Die zu diesem Gegenstand der vorliegenden Erfindung gemachten Ausführungen gelten für die anderen Gegenstände der vorliegenden Erfindung gleichermaßen und umgekehrt.

Diese Ausbuchtung ragt vorzugsweise aus dem Umfang, insbesondere dem seitlichen Umfang, der sich zwischen den beiden Stirnseiten der Kartuschenaufnahme erstreckt heraus. Vorzugsweise ist die Ausbuchtung Teil der Mischkammer. Vorzugsweise ist der Umfang der Mischkammer im wesentlichen kreisförmig gestaltet und die Ausbuchtung ragt aus dieser Kreisform heraus. Gemäß einer besonders bevorzugten Ausführungsform der vorliegenden Erfindung ist der Ablauf des fertiggestellten Getränks oder Lebensmittels in der Ausbuchtung vorgesehen.

Erfindungsgemäß weist die Kartuschenaufnahme einen Befestigungs- und/oder Sicherungsring auf. Dieser Befestigungs- und/oder Sicherungsring nimmt vorzugsweise die Kartusche, die an der Kartuschenaufnahme befestigt wird, auf. Erfindungsgemäß ist der Befestigungs- und/oder Sicherungsring mit einer Sollbruch- und/oder Solldeformationsstelle an der Mischkammer vorgesehen. Vor der Herstellung eines Getränks oder Lebensmittels wird diese Stelle zerstört und/oder verformt, insbesondere irreversibel verformt. Dies kann beispielsweise durch eine Bewegung der Kartusche und der Kartuschenaufnahme relativ zueinander erfolgen. Durch die Deformation und/oder Zerstörung kann die Kartuschenaufnahme nur einmal benutzt werden und/oder der Verbund zwischen der Kartuschenaufnahme und der Kartusche kann nicht mehr gelöst werden.

Vorzugsweise ist in der Mischkammer mindestens ein Mischelement vorgesehen, das für eine Verwirbelung des Lösemittels oder des Gemischs von Lösemittel und Substrat sorgt. Vorzugsweise ist das Mischelement als Ausbuchtung im Boden vorgesehen. Vorzugsweise ist das Mischelement so gestaltet, dass Kohlensäure, die in dem Lösemittel gelöst ist, nicht oder nur geringfügig ausgast. Vorzugsweise ist das Mischelement so gestaltet, das es nur einen geringen Druckverlust aufweist.

Vorzugsweise weist die Kartuschenaufnahme ein Aufstechmittel, das die Membran perforiert, auf. Dieses Aufstechmittel ist beispielsweise als Dorn gestaltet, der aus dem Boden der Mischkammer ragt. Vorzugsweise weist das Aufstechmittel an seinem äußeren Umfang mindestens eine, vorzugsweise mehrere Ein- und/oder Ausbuchtungen auf, die als Ablauf für das Substrat dienen. Die Menge und die Größe der Ein- und/oder Ausbuchtungen hängt vorzugsweise von der Viskosität des Substrats ab. Vorzugsweise weist das Aufstechmittel einen Kanal auf, der in oder im Bereich der Spitze endet. Durch diesen Kanal kann ein Gas, insbesondere Luft oder CO₂ in die Kartusche geblasen werden, um die Abgabe des Substrats zu beschleunigen und/oder zu dosieren.

Vorzugsweise weist die Kartuschenaufnahme eine Dornführung auf, wobei das Aufstechmittel verschiebbar innerhalb der Dornführung gelagert ist, wobei das Aufstechmittel zwischen einer eingefahrenen Position, in welcher das Aufstechmittel von der Membran beabstandet ist, und einer ausgefahrenen Position, in welcher das Aufstechmittel die Membran der Kartusche durchsticht und bis in die Kartusche ragt, verschiebbar ist. In die Außenwandung des Aufstechmittels ist vorzugsweise wenigstens ein Seitenkanal zum Leiten des Getränke- und/oder Lebensmittelsubstrats in Richtung der Mischkammer, wenn die Membran von dem Aufstechmittel durchstochen ist, eingebracht. Ferner ist in das Aufstechmittel besonders bevorzugt eine Druckluftleitung integriert, wobei an einer der Kartusche abgewandten Seite des Aufstechmittels ein, insbesondere von außerhalb der Kartuschenaufnahme zugänglicher Druckluftanschluss zur Verbindung mit einer Druckluftquelle ausgebildet ist und wobei an einer der Kartusche zugewandten Seite des Aufstechmittels ein Vorzugsweise sind der Zulauf und der Ablauf an gegenüberliegenden Enden der Kartuschenaufnahme vorgesehen. Besonders bevorzugt ist das Aufstechmittel in einer Flucht mit dem Zulauf und dem Ablauf vorgesehen.

Gemäß einem weiteren bevorzugten oder erfindungsgemäßen Gegenstand der vorliegenden Erfindung ist der Auslauf beweglich, insbesondere schwenkbar, an der Mischkammer vorgesehen oder weist ein Mittel auf, mit dem der Auslauf ausgerichtet, insbesondere in Richtung der Seitenwand des Gefäßes, das das fertiggestellte Getränk oder Lebensmittel aufnimmt, gerichtet werden kann. Diese Ausführungsform ist insbesondere bei Getränken oder Lebensmittels, die zu Schaumbildung neigen vorteilhaft. Das Bewegen des Auslaufs kann manuell oder motorisch erfolgen. Für den Fall, dass die Kartusche eine Identifikation aufweist, kann das Schwenken automatisch erfolgen, nachdem der Dispenser die Kartusche erkannt hat.

Noch ein Gegenstand der vorliegenden Erfindung ist ein System aufweisend die erfindungsgemäße Kartuschenaufnahme, an/in der eine Kartusche vorgesehen ist, die einen Wandbereich aufweist, an dessen einem Ende sich ein Verbindungsbereich anschließt, der, insbesondere mit einer Membran (14), verschlossen ist und an dessen gegenüberliegendem Ende gegebenenfalls ein Bodenbereich vorgesehen ist, wobei der Wandbereich und gegebenenfalls der Bodenbereich einen Hohlraum aufspannen, der ein Getränke- und/oder Lebensmittelsubstrat aufnimmt.

Die zu diesem Gegenstand der vorliegenden Erfindung gemachten Ausführungen gelten für die anderen Gegenstände der vorliegenden Erfindung gleichermaßen und umgekehrt.

Die Kartusche wird vorzugsweise aus Kunststoff, insbesondere durch ein Moulding- und/oder ein Blasverfahren hergestellt. Die Kartusche weist eine Seitenwand auf, die beispielsweise einen runden, rechteckigen, quadratischen, konischen oder ovalen Querschnitt aufweist. An einem Ende der Seitenwand ist in der Regel ein Boden, insbesondere einstückig vorgesehen. Die Seitenwand und gegebenenfalls der Bodenbereich spannen einen Hohlraum auf, in dem ein Getränke- und/oder Lebensmittelsubstrat, insbesondere in flüssiger Form vorgesehen ist. An dem anderen Ende des Wandbereichs ist ein Verbindungsbereich vorgesehen, mit dem die Kartusche mit der Kartuschenaufnahme verbunden wird. Diese Kartuschenaufnahme kann Teil eines Dispensers oder ein vom Dispenser separates Bauteil sein.

Vorzugsweise ist der Verbindungsbereich so vorgesehen, dass er einen Flansch aufweist. Der Flansch steht aus dem Verbindungsbereich hervor und steht vorzugsweise in einem Winkel, besonders bevorzugt einem rechten Winkel von einem Wandbereich des Verbindungsbereichs ab. Zur Herstellung des Getränks oder Lebensmittels ist der Flansch vorzugsweise horizontal ausgerichtet. Vorzugsweise ist der Flansch aus Vollmaterial, d.h. nicht hohl gefertigt.

Weiterhin bevorzugt ist der Flansch mit einem Positionier- und oder Abdeckmittel versehen. Das Positioniermittel stellt sicher, dass die Kartusche nur in einer bestimmten Position, insbesondere in einem bestimmten Drehwinkel, insbesondere Bezogen auf die Längsmittelachse der Kartusche an dem Dispenser und/oder an der Kartuschenaufnahme angeordnet werden kann. Das Abdeckmittel deckt einen Bereich, insbesondere einen Bereich, durch den das fertig gestellte Getränk oder Lebensmittel fließt ab. Vorzugsweise sind das Positioniermittel und das Abdeckmittel identisch.

Vorzugsweise ist das Positioniermittel und/oder Abdeckmittel eine Ein- und/oder Ausbuchtung, die aus dem Flansch, insbesondere dessen Umfang hervorsteht. Vorzugsweise ist das Positioniermittel und/oder Abdeckmittel einstückig mit dem Flansch vorgesehen. Beispielsweise ist das Positioniermittel und/oder Abdeckmittel als Nase ausgebildet, die an einer Stelle an den Umfang des Flanschs angeformt ist. Die Dicke des Positioniermittels und/oder Abdeckmittels entspricht dabei zumindest im wesentlichen der Dicke des Flanschs.

Gemäß einer bevorzugten Ausführungsform ist zwischen dem Wandbereich und dem Verbindungsbereich ein Hals vorgesehen. Dieser Hals kann beispielsweise einen runden Querschnitt aufweisen. Der Hals stellt den Wandbereich des Verbindungsbereichs dar. Der Flansch schließt sich vorzugsweise rechtwinklig an den Hals an.

Vorzugsweise ist die Membran, die die Kartusche vor deren Gebrauch, insbesondere hermetisch verschließt, an dem Flansch, insbesondere dessen Stirnfläche, vorgesehen, insbesondere gesiegelt. Dafür kann der Flansch, insbesondere dessen Stirnfläche eine Wulst, insbesondere eine kreisringförmige Wulst aufweisen, die beim Siegeln mit dem Siegelwerkzeug zusammenwirkt. Vorzugsweise ist der äußere Umfang der Membran geringer als der äußere Umfang des Flansches.

Vorzugsweise ist im Wandbereich und/oder im Bereich des Halses ein Befestigungsmittel vorgesehen ist. Mit diesem Befestigungsmittel kann die Kartusche mit einem Dispenser verbunden werden. Das Befestigungsmittel kann beispielsweise eine Nut sein, in die ein Befestigungsmittel an dem Dispenser eingreift.

Die Kartuschenaufnahme kann fest mit der Kartusche verbunden oder ein Austauschteil sein, das nach dem Gebrauch der Kartusche von dieser entfernt und mit einer neuen Kartusche verbunden wird. Vorzugsweise ist die Kartuschenaufnahme aus Kunststoff, insbesondere im Spritzguss gefertigt. Vorzugsweise wird die Kartuschenaufnahme mit einem Dispenser verbunden.

Vorzugsweise deckt das Abdeckmittel, das an dem Flansch der Kartusche vorgesehen ist den Ablauf den Kartuschenaufnahme ab.

Vorzugsweise wirkt der Flansch an der Kartusche, insbesondere deren Umfang dichtend mit der Kartuschenaufnahme zusammen. Dafür kann der Umfang des Flansches beispielsweise in eine Nut in der Kartuschenaufnahme eingreifen. Diese Flansch/Nut-Verbindung kann auch als Kraftschluss dienen, um zu verhindern, dass sich die Kartusche relativ zu der Kartuschenaufnahme während der Getränke- oder Lebensmittelherstellung verschiebt und die Verbindung zwischen Kartusche und Kartuschenaufnahme undicht wird.

Gemäß einer bevorzugten Ausführungsform sind die Kartusche und die Kartuschenaufnahme, insbesondere bevor die Membrane angestochen wird, längsverschieblich zueinander vorgesehen. Durch diese Längsverschiebung kann das Aufstechmittel dann mit der Membrane in Eingriff gebracht werden und diese durchstechen.

Vorzugsweise sind die Kartusche und die Kartuschenaufnahme drehfest miteinander verbunden.

Vorzugsweise weist das Aufstechmittel einen Kanal auf. Durch diesen Kanal kann ein Gas in die Kartusche gedrückt werden, das das Getränke- und/oder Lebensmittelsubstrat aus der Kartusche insbesondere in den Mischraum der Kartuschenaufnahme drückt.

### Figurenbeschreibung

Im folgendem wird die Erfindung anhand der Figuren 1 bis 12 erläutert. Diese Erläuterungen sind lediglich beispielhaft und schränken den allgemeinen erfindungsgemäßen Gedanken nicht ein. Die Erläuterungen gelten für die erfindungsgemäße Kartusche und für das erfindungsgemäße System gleichermaßen.
- Figuren 1 - 4: zeigen eine erste Ausführungsform des erfindungsgemäßen Systems.
- Figuren 5 - 8: zeigen noch eine Ausführungsform des erfindungsgemäßen Systems.
- Figur 9: zeigt eine Ausführungsform mit einem Befestigungsmittel.
- Figuren 10 und 11: zeigen zwei Beispiele von Mischelementen
- Figur 12: zeigt die Halterung für die Kartuschenaufnahme an dem Dispenser
- Figur 13: zeigt eine Kartusche eines Systems gemäß einer weiteren Ausführungsform der vorliegenden Erfindung
- Figur 14: zeigt eine Kartuschenaufnahme des Systems gemäß der weiteren Ausführungsform der vorliegenden Erfindung

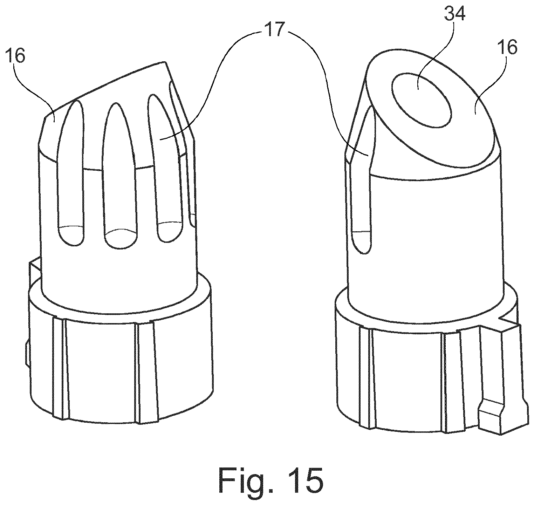

- Figur 15: zeigt einen Dorn der Kartuschenaufnahme gemäß der weiteren Ausführungsform der vorliegenden Erfindung

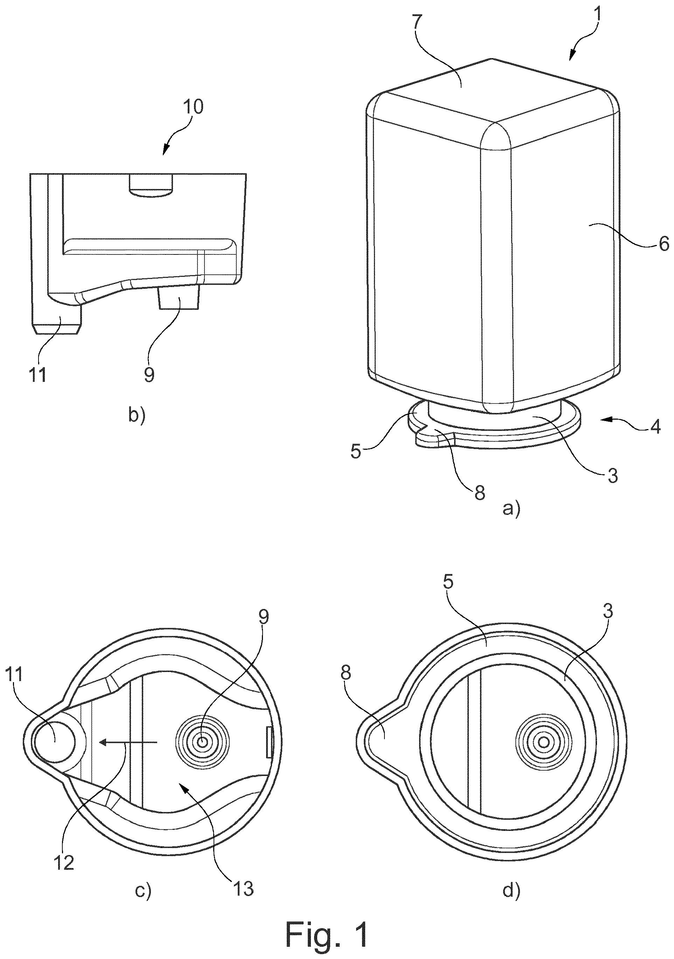

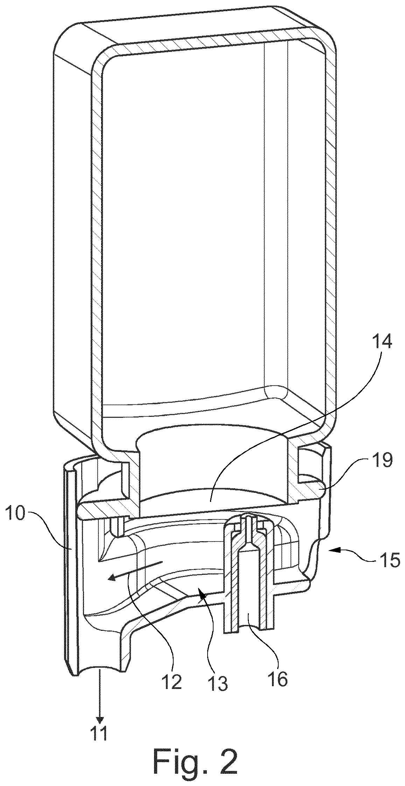

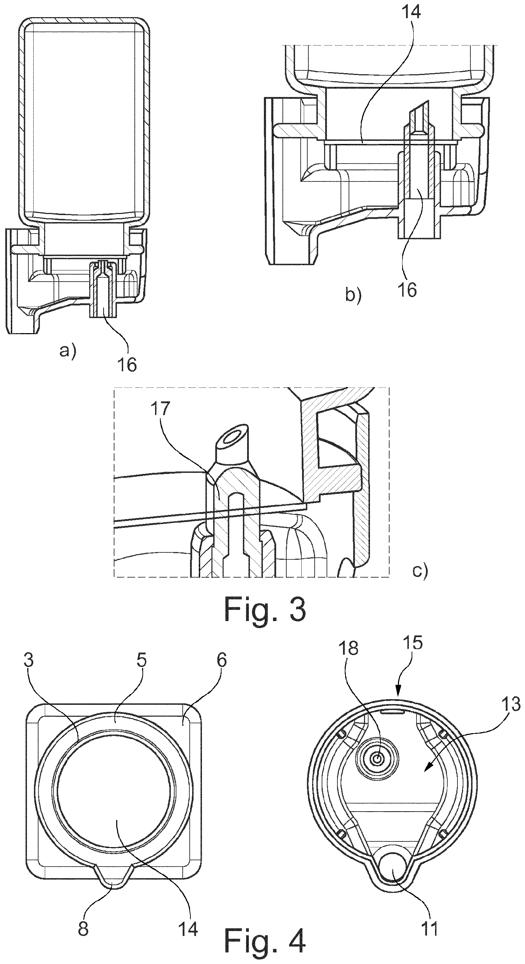

Figuren 1 - 4 zeigen eine erste Ausführungsform des erfindungsgemäßen Systems, das aus einer Kartusche 1 sowie einer Kartuschenaufnahme 10 besteht. Die Kartusche wird vorzugsweise aus einem Kunststoffmaterial gefertigt, beispielsweise durch Spritzen oder Spritzgießen oder durch eine Blastechnik. Die Kartusche weist einen, in dem vorliegenden Fall quadratischen, Wandbereich 6 auf, an dessen einem, hier oberen, Ende sich ein Bodenbereich 7 anschließt. Der Wandbereich 6 und der Bodenbereich 7 begrenzen einen Hohlraum, in dem sich das Getränke- und/oder Lebensmittelsubstrat, insbesondere ein Konzentrat, befindet, mit dem ein Getränk oder Lebensmittel hergestellt werden kann. An dem dem Bodenbereich gegenüberliegenden Ende, hier unteren Ende, des Wandbereiches ist ein Verbindungsbereich 4 vorgesehen, der in dem vorliegenden Fall einen Hals 3 sowie einen Flansch 5 aufweist. Der Hohlraum der Kartusche wird nach deren Befüllung durch einen Verschluss 14, hier eine Membran, hermetisch abgeschlossen. Die Membran 14, insbesondere eine Kunststofffolie wird vorzugsweise stoffschlüssig, insbesondere durch Siegeln mit dem Flansch verbunden. Mit dem Verbindungsbereich wird die Kartusche mit einer Kartuschenaufnahme verbunden. An dem Flansch 5 ist ein Positionier- und/oder Abdeckmittel 8 vorgesehen, das in dem vorliegenden Fall als Ausbuchtung, insbesondere als nasenförmige Ausbuchtung, vorgesehen ist. Die Nase ist hier einstückig an den Flansch angeformt. Des Weiteren weist das System, wie insbesondere den Figuren 1 b) und c) entnommen werden kann, eine Kartuschenaufnahme 10 auf. Diese Kartuschenaufnahme weist einen Lösemittel- insbesondere Wasserzulauf 15 (vergleiche Figur 2) sowie eine Mischkammer 13 auf, in der das Lösemittel und das Getränke- und/oder Lebensmittelsubstrat gemischt werden. Die Strömungsrichtung des Gemisches ist in Figur 1 c) durch den Pfeil 12 dargestellt. Das fertiggestellte Getränk/Lebensmittel verlässt die Mischkammer durch den Ablauf 11 und wird in einem Behälter, beispielsweise einem Glas aufgefangen. Weiterhin wie insbesondere der Figur 2 entnommen werden kann, weist die Kartuschenaufnahme ein Aufstechmittel 16, hier einen Dorn 16, auf, der wie insbesondere anhand Figur 3 zu sehen ist, die Membrane, die an den Flanschbereich der Kartusche gesiegelt ist, aufsticht, so dass das Getränke- oder Lebensmittelsubstrat insbesondere entlang der Außenfläche des Dorns, der dafür an seiner Außenseite vorzugsweise mit Ablaufkanälen 17 versehen ist, in die Strömungskammer 13 fließen kann.

Figur 2 zeigt das System, bevor das Aufstechmittel 16 mit der Membrane 14 in Eingriff gelangt. Um dies zu erreichen werden die Kartusche und/oder die Kartuschenaufnahme relativ sowie längs zueinander verschoben, so dass der Dorn 16 die Membrane 14 durchdringt, was insbesondere anhand von Figur 3 c) deutlich zu sehen ist. In dieser Figur können auch besonders gut die Kanäle 17 erkannt werden, durch die das Substrat in die Mischkammer fließt. Der Fluss des Substrates in die Mischkammer kann durch Gas, das durch einen Kanal 18 in dem Aufstechdorn 16 in die Kartusche gedrückt wird, beschleunigt und gezielt gesteuert werden. Beispielsweise kann der Druck in der Kartusche dem Volumenstrom des Lösemittels angepasst werden.

Wie insbesondere den Figuren 1 d) sowie Figur 4 entnommen werden kann, wirkt der Flansch 5 der Kartusche 1 dichtend mit der Kartuschenaufnahme zusammen und stellt dadurch sicher, dass Flüssigkeit die Mischkammer nur durch den Ablauf 5 verlässt. Des Weiteren kann insbesondere diesen Figuren entnommen werden, dass die Ausbuchtung 8 in dem vorliegenden Fall nicht nur ein Positioniermittel ist, sondern auch den Ablauf 11 in der Kartuschenaufnahme insbesondere dichtend abdeckt. Der Flansch 8 und die daran vorgesehene Ausbuchtung 8 können mit ihrer Stirnfläche und/oder mit ihrem Umfang dichtend mit entsprechenden Flächen der Kartuschenaufnahme zusammenwirken.

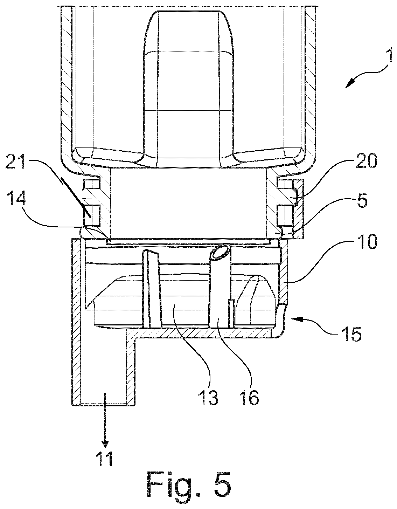

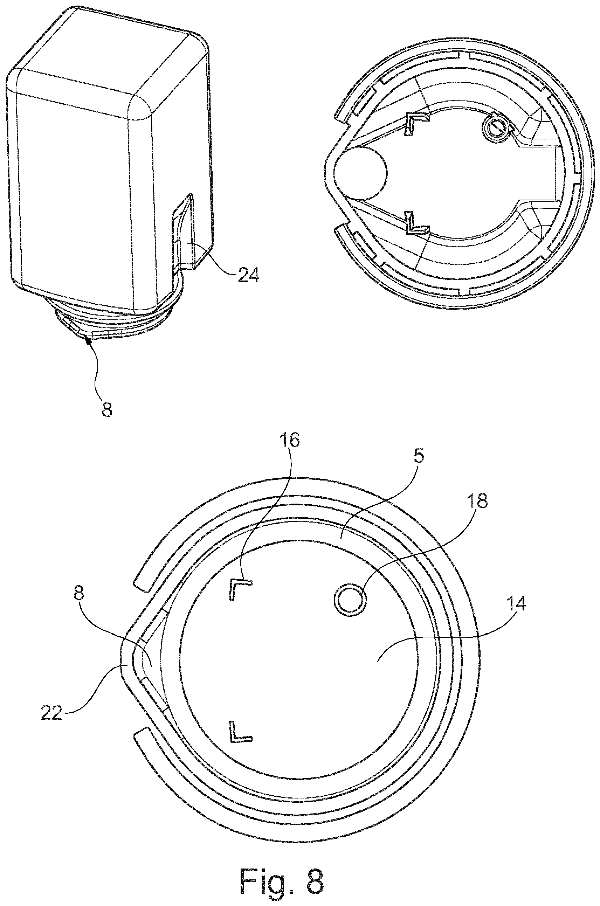

Die Figuren 5 - 8 zeigen eine weitere Ausführungsform des erfindungsgemäßen Systems. Bezüglich der Kartusche kann im Wesentlichen auf die Ausführung zu den Figuren 1 bis 4 verwiesen werden, wobei die Kartusche in ihrem Verbindungsbereich neben dem Flansch 5 noch ein Befestigungsmittel 20 aufweist, das die Kartusche 1 mit der Kartuschenaufnahme 10 verbindet. Des Weiteren weist der Wandbereich 6 in dem vorliegenden Fall eine Einbuchtung 24 auf, die eine Längsverschiebung zwischen der Kartusche und der Kartuschenaufnahme und gegebenenfalls einem Dispenser erlaubt und die auch eine Führung für die Kartusche darstellt.

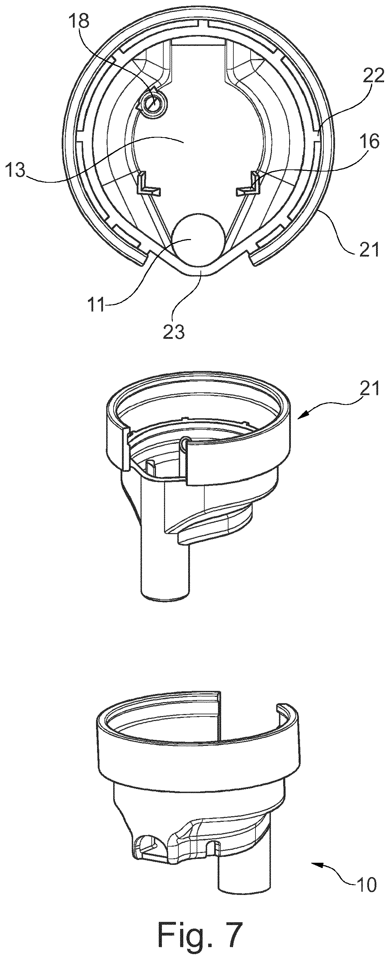

Auch bezüglich der Kartuschenaufnahme 10 kann auf die Ausführung gemäß den Figuren 1 - 4 verwiesen werden. Wie jedoch insbesondere Figur 7 entnommen werden kann, weist die Kartuschenaufnahme in dem vorliegenden Fall einen Befestigungs- beziehungsweise Sicherungsring 21 auf, der mittels Deformations- und/oder Sollbruchstellen 22 mit der Mischkammer 13 verbunden ist. Dieser Ring 21 wirkt kraftschlüssig mit dem Befestigungsmittel 20, beispielsweise hier einem Bund 20, das an der Kartusche vorgesehen ist, zusammen. Des Weiteren ist in Figur 7 deutlich zu erkennen, dass die Kartuschenaufnahme 10 neben dem Dorn 18 noch weitere Aufstechmittel 16 aufweist. Durch den Dorn 18 wird ein Gas in die Kartusche gedrückt, das das Substrat aus der Kartusche herausdrückt. Die Öffnungsmittel 16 schneiden, hier gewinkelte Schnitte, in die Membran hinein, die dann Laschen bilden, die unter dem Druck des Substrates nach unten gedrückt werden und somit einen leichteren Abfluss des Substrats ermöglichen. Der Fachmann erkennt, dass auch ein Aufstechmittel 16 genügen kann, beziehungsweise dass es auch möglich ist das Aufstechen der Membran und Ablaufen des Substrats wie anhand der Figuren 1 - 4 erläutert in dem vorliegenden Fall einzusetzen. Selbstverständlich können auch die hiesigen Öffnungsmittel 16, 18 auf die Ausführungsform gemäß den Figuren 1 bis 4 übertragen werden.

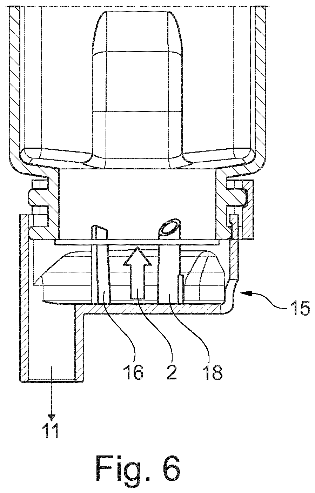

Figur 5 zeigt das System vor dem Aufstechen. Figur 6 zeigt das System nachdem die Membrane aufgestochen worden ist. Durch eine mittels Pfeil 2 dargestellte Relativbewegung zwischen der Mischkammer 13 und der Kartusche 1, werden die Solldeformationsbeziehungsweise Sollbruchstellen 22 so deformiert beziehungsweise zerstört, dass sich die Kartusche gemeinsam mit dem Ring 21 in Richtung der Mischkammer 13 bewegen kann. Durch diese Bewegung, bei der der Flansch 5 auch in die Nut 27 eingeführt wird und mit dieser dichtend zusammenwirkt, wird die Membrane 14 perforiert und das Substrat kann aus der Kartusche in die Mischkammer strömen, in der es mit einem Lösungsmittel, das durch den Zulauf 15 in die Mischkammer dosiert wird, gemischt wird und die Mischkammer durch den Ablauf 11 verlässt.

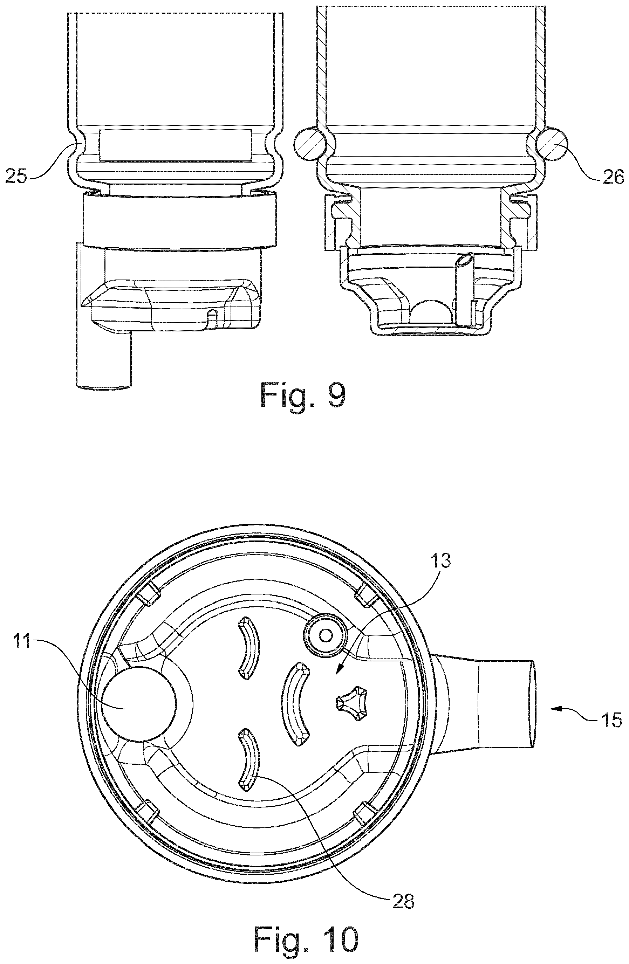

Figur 9 zeigt ein Befestigungsmittel hier eine Nut 25 im Wandbereich der Kartusche. In diese Nut kann ein Befestigungsmittel 26 eingreifen, mit dem die Kartusche an einem Dispender befestigt wird.

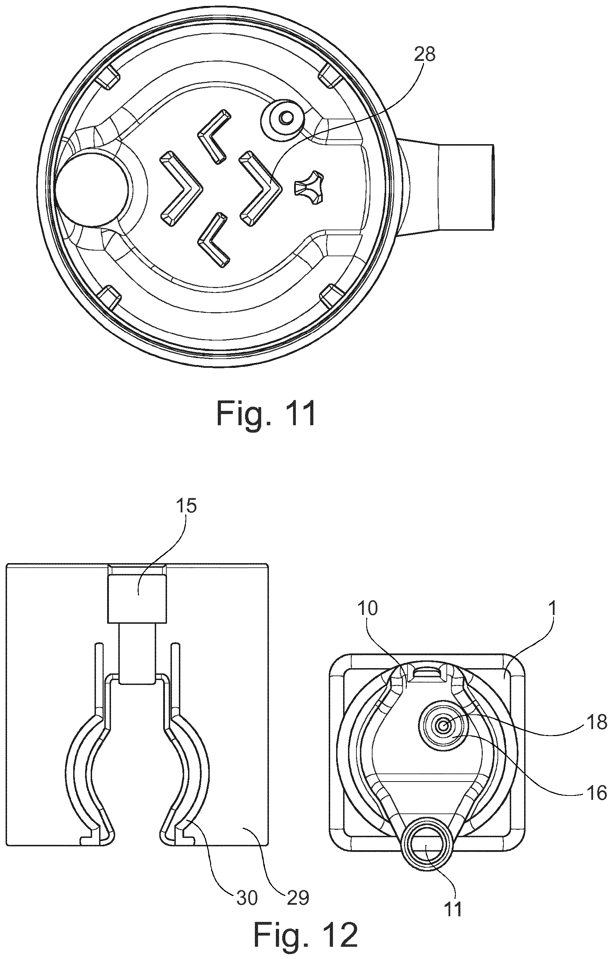

Die Figuren 10 und 11 zeigen jeweils die Mischkammer in Draufsicht. In dem vorliegenden Fall ist die Mischkammer 13 mit einem Mischelement 28 versehen, das in dem vorliegenden Fall jeweils aus mehreren Komponenten besteht. Bei der Ausführungsform gemäß Figur 10 sind die Komponenten kreisringsegmentförmig, wobei sich die Durchmesser der Kreisringe unterscheiden können. Bei der Ausführungsform gemäß Figur 11 sind die Komponenten Winkel. Vorzugsweise sind die Mischelemente 28 so gestaltet, dass sie zum einen das Substrat und das Lösemittel gut miteinander vermischen, dass zum anderen aber auch nur ein möglichst geringer Druckverlust auftritt.

In Figur 12 sind rechts das System bestehend aus der Kartusche 1 und der Kartuschenaufnahme 10. Die Ansicht ist hier aus Richtung des Ablaufs. Die linke Darstellung von Figur 12 zeigt eine Halterung 29, mit der das System 1, 10 an einem Dispenser gehalten wird. Die Halterung 29 weist eine Ausnehmung auf, in die der Boden der Mischkammer zumindest teilweise hineinragt. Die Halterung dient als Auflager für das System. Unterhalb der Halterung 29 befindet sich ein Behälter, in den das fertiggestellte Getränk oder Lebensmittel hineinläuft. Des Weiteren weist die Halterung eine Führung 30 auf, die formschlüssig mit der Kartuschenaufnahme 10 zusammenwirkt und diese gegen seitliches Verrutschen und/oder Verdrehen relativ zu der Halterung 29 sichert. In dem vorliegen Fall ist die Führung beabstandet von der Ausnehmung vorgesehen. Der Faachmann versteht das die Funktion der Sicherung gegen Verrutschen und/oder Verdrehen auch von einem Formschluss zwischen der Ausnehmung und dem Boden der Kartuschenaufnahme übernommen werden kann. An die Ausnehmung schließt sich ein Anschluss für das Lösungsmittel an, der aber vorzugsweise nicht Teil der Halterung ist.

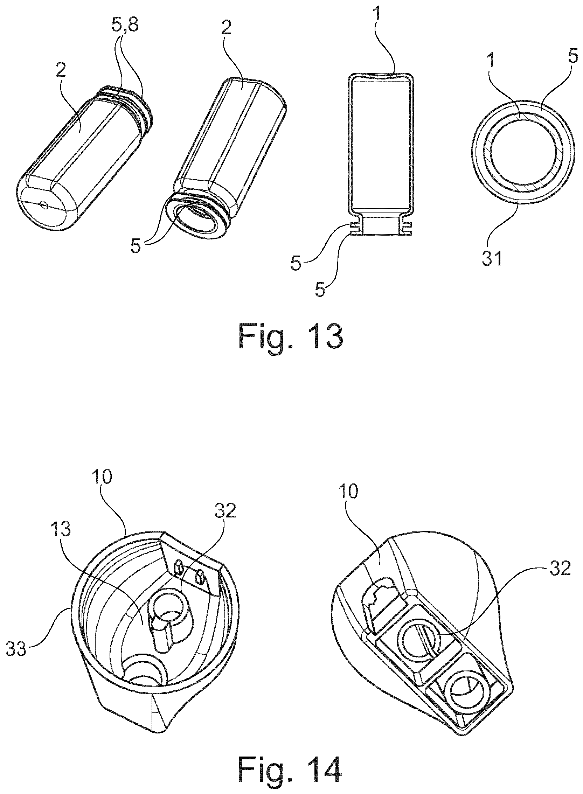

In Figur 13 sind vier Abbildungen einer Kartusche 1 gemäß einer weiteren beispielhaften Ausführungsform der vorliegenden Erfindung dargestellt. Die Kartusche 1 und das zugehörige System aus Kartusche 2 und Kartuschenaufnahme 10 (illustriert in Figur 14) ähneln in ihrer Funktionsweise dem anhand Figuren 1 bis 4 erläuterten System gemäß der ersten Ausführungsform der vorliegenden Erfindung.

Die in Figur 13 gezeigten Kartusche 1 weist im Unterschied allerdings zwei Flansche 5 auf. Beide Flansche 5 dienen zur Befestigung der Kartuschenaufnahme 10 an der Kartusche 1. Am äußeren Flansch 5 ist zudem die Membran 14 angesiegelt.

Der Querschnitt (senkrecht zur Längsachse der Kartusche 1) beider Flansche 5 weist einen im Wesentlichen runden Umfang auf, wobei an einer Seite ein geradliniger Umfangsbereich 31 vorgesehen ist. Im geradlinigen oder abgeflachten Umfangsbereich 31 verläuft der Umfang als nahezu gerade Linie (zu erkennen an der Unterseite des Flansches 5 in der rechten Abbildung in Figur 13), während der Umfang des Flansches 5 außerhalb des geradlinigen Umfangsbereich 31 als gekrümmte Linie verläuft. Der geradlinige Umfangsbereich 31 dient als Positioniermittel, wodurch die Orientierung der Kartusche 1 gegenüber der Kartuschenaufnahme 10 festgelegt wird.

In Figur 11 ist die passende Kartuschenaufnahme 10 zu sehen. Es ist zu erkennen, dass bei der weiteren Ausführungsform der Umfang der Kartuschenaufnahme 10 eine zur Kontur der beiden in Figur 10 dargestellten Flansche 5 korrespondierende Form aufweist, so dass die Kartusche 2 und Kartuschenaufnahme 10 nur in einer bestimmten Orientierung zueinander miteinander verbunden werden können. Der geradlinige Umfangsbereich 31 dient somit als Verdrehschutz. Vorteilhafterweise wird hierdurch auch definiert, in welchem Bereich der Kartusche 1 das Gas in den Hohlraum gedrückt wird.

Innerhalb der Mischkammer 13 ist eine Dornführung 32 angeordnet, in welcher der Dorn 16 (auch als Aufstechmittel bezeichnet) beweglich geführt ist. Die Perforation der Membran 14 wird bei der weiteren Ausführungsform also nicht durch eine Relativbewegung zwischen Kartusche 1 und Kartuschenaufnahme 10 herbeigeführt, sondern der Dorn 16 ist beweglich in der fest relativ zur Kartusche 1 fixierten Kartuschenaufnahme 10 geführt. Auf diese Weise kann der Dorn 16 von einer eingefahrenen Position (entspricht vor allem dem Ausgangszustand des Systems), in welcher Dorn 16 von der Membran 14 beabstandet ist, in eine ausgefahrene Position überführt werden, in welcher der Dorn 16 in den Hohlraum der Kartusche 1 vorsteht und dabei die Membran 14 perforiert. In dieser ausgefahrenen Position ist die Kartusche 1 also geöffnet und das Getränke- und/oder Lebensmittelsubstrat kann durch Ablaufkanäle 17 in der Außenfläche des Dorns 16 an der Membran 14 vorbei in die Mischkammer 13 gelangen.

An einer der Kartusche 1 zugewandten Seite der Kartuschenaufnahme 10 ist ferner eine Rastleiste 33 vorgesehen, welche zum Befestigen der Kartusche 1 an der Kartuschenaufnahme 10 einen der beiden Flansche 5 form- und/oder kraftschlüssig umgreift. Auf diese Weise wird eine Relativbewegung zwischen Kartusche 1 und Kartuschenaufnahme 10 unterbunden.

In Figur 14 ist eine schematische Ansicht eines Dorns 16 dargestellt, welcher in der in Figur 13 gezeigten Dornführung 32 geführt wird. Der Dorn 16 weist eine innere Druckluftleitung 34 auf, welche als Gaseinlass 18 dient, sowie die äußeren Ablaufkanäle 17, durch welche das Substrat an der mittels des Dorns 16 aufgestochenen Membran 14 vorbei in die Mischkammer 13 fließen kann, auf. An einer der Kartusche 1 abgewandten Seite des Dorns 16 ist ein von außerhalb der Kartuschenaufnahme 10 zugänglicher Druckluftanschluss der Druckluftleitung 34 zur Verbindung mit einer Druckluftquelle ausgebildet, wobei an einer der Kartusche 1 zugewandten Seite des Dorns 16 ein Druckluftausgang der Druckluftleitung 34 zum Einblasen der Druckluft in die Kartusche 1 ausgebildet ist.

Eine Anordnung, in welcher der in Figur 14 gezeigte Dorn 16 in der Dornführung 32 der in Figur 13 gezeigten Kartuschenaufnahme 10 angeordnet ist und die in Figur 13 gezeigte Kartuschenafunahme 10 sodann mit der in Figur 12 gezeigten Kartusche 1 verbunden ist, stellt ein Systems gemäß der weiteren beispielhaften Ausführungsform der vorliegenden Erfindung dar.

### Bezugszeichenliste

- 1: Kartusche
- 2: Bewegungsrichtung
- 3: Hals
- 4: Verbindungsbereich
- 5: Flansch
- 6: Wandbereich
- 7: Bodenbereich
- 8: Positionier- und/oder Abdeckmittel, Ein- und/oder Ausbuchtung,
- 9: Zulauf der Substanz, Aufstechmittel
- 10: Kartuschenaufnahme
- 11: Ablauf Substanz plus Lösungsmittel/Wasser
- 12: Strömungsrichtung Substanz plus Lösungsmittel/Wasser
- 13: Mischkammer
- 14: Verschluss, Membran
- 15: Lösemittel-, Wasserzulauf
- 16: Aufstechmittel, Dorn
- 17: Ablaufkanäle
- 18: Gaseinlass
- 19: Dichtung, Bunddichtung
- 20: Befestigungsmittel, Bund
- 21: Befestigungs-, Sicherungsring
- 22: Deformations- und/oder Sollbruchstelle
- 23: Ein- und/oder Ausbuchtung der Kartuschenaufnahme
- 24: Einbuchtung, Führung
- 25: Formschlussmittel für ein Befestigungsmittel 26
- 26: Befestigungsmittel
- 27: Dichtmittel, Nut
- 28: Mischelemente
- 29: Halterung
- 30: Führung für die Kartuschenaufnahme
- 31: Geradliniger Umfangsbereich
- 32: Dornführung
- 33: Rastleiste
- 34: Druckluftleitung

## Patentansprüche

1. Kartuschenaufnahme (10) mit einem Verdünnungsmittel- insbesondere Wasserzulauf (15), einer Mischkammer (13) in der das Verdünnungsmittel und ein Getränke- und/oder Lebensmittelsubstrat gemischt werden und einem Ablauf (11), wobei die Kartuschenaufnahme (10) einen Befestigungs- und/oder Sicherungsring (21) aufweist **dadurch gekennzeichnet, dass** der Befestigungs- und/oder Sicherungsring (21) mit einer Sollbruch- und/oder Solldeformationsstelle (22) an der Mischkammer vorgesehen ist.

2. Kartuschenaufnahme (10) nach Anspruch 1, wobei sich bezogen auf die Strömungsrichtung des Verdünnungsmittels der Strömungsquerschnitt zunächst erweitert und dann wieder vermindert.

3. Kartuschenaufnahme (10) nach einem der vorhergehenden Ansprüche, wobei die Mischkammer (13) eine Ausbuchtung aufweist.

4. Kartuschenaufnahme (10) nach Anspruch 3, **dadurch gekennzeichnet, dass** der Ablauf (11) in der Ausbuchtung vorgesehen ist.

5. Kartuschenaufnahme (10) nach einem der voranstehenden Ansprüche, **dadurch gekennzeichnet, dass** in der Mischkammer (13) mindestens ein Mischelement vorgesehen ist.

6. Kartuschenaufnahme (10) nach einem der voranstehenden Ansprüche, **dadurch gekennzeichnet, dass** die Kartuschenaufnahme (10) ein Aufstechmittel (16), das die Membran (14) perforiert, aufweist.

7. Kartuschenaufnahme (10) nach Anspruch 6, wobei die Kartuschenaufnahme (10) eine Dornführung (32) aufweist und das Aufstechmittel (16) verschiebbar innerhalb der Dornführung (32) gelagert ist, wobei das Aufstechmittel (16) zwischen einer eingefahrenen Position, in welcher das Aufstechmittel (16) von der Membran (14) beabstandet ist, und einer ausgefahrenen Position, in welcher das Aufstechmittel (16) die Membran (14) der Kartusche (1) durchsticht und bis in die Kartusche (1) ragt, verschiebbar ist.

8. Kartuschenaufnahme (10) nach Anspruch 7, wobei in die Außenwandung des Aufstechmittels (16) wenigstens ein Seitenkanal (71) zum Leiten des Getränke- und/oder Lebensmittelsubstrats in Richtung der Mischkammer (8), wenn die Membran (14) von dem Aufstechmittel (16) durchstochen ist, eingebracht ist.

9. Kartuschenaufnahme (10) nach Anspruch 8, wobei in das Aufstechmittel (16) eine Druckluftleitung (34) integriert ist und wobei an einer der Kartusche (1) abgewandten Seite des Aufstechmittels (16) ein, insbesondere von außerhalb der Kartuschenaufnahme (10) zugänglicher Druckluftanschluss der Druckluftleitung (34) zur Verbindung mit einer Druckluftquelle ausgebildet ist und wobei an einer der Kartusche (1) zugewandten Seite des Aufstechmittels (16) ein Druckluftausgang der Druckluftleitung (34) zum Einblasen der Druckluft in die Kartusche (1) ausgebildet ist.

10. Kartuschenaufnahme (10) nach einem der voranstehenden Ansprüche, **dadurch gekennzeichnet, dass** der Zulauf (15) und der Ablauf (11) an gegenüberliegenden Enden der Kartuschenaufnahme (10) vorgesehen sind.

11. Kartuschenaufnahme nach einem der Ansprüche 7 bis 10, **dadurch gekennzeichnet, dass** das Aufstechmittel (16) in einer Flucht mit dem Zulauf (15) und dem Ablauf (11) vorgesehen ist.

12. System aufweisend eine Kartuschenaufnahme (10) nach einem der voranstehenden Ansprüche an/in der eine Kartusche (1) vorgesehen ist, die einen Wandbereich (6) aufweist, an dessen einem Ende sich ein Verbindungsbereich (4) anschließt, der, insbesondere mit einer Membran (14), verschlossen ist und an dessen gegenüberliegendem Ende gegebenenfalls ein Bodenbereich (7) vorgesehen ist, wobei der Wandbereich und gegebenenfalls der Bodenbereich einen Hohlraum aufspannen, der ein Getränke- und/oder Lebensmittelsubstrat aufnimmt.

13. System nach Anspruch 12, **dadurch gekennzeichnet, dass** der Verbindungsbereich (4) einen Flansch (5) aufweist, der mit einem Positioniermittel und/oder Abdeckmittel (8) versehen ist.

14. System nach Anspruch 13, **dadurch gekennzeichnet, dass** das Positioniermittel und/oder Abdeckmittel (8) eine Ein- und/oder Ausbuchtung ist, die aus dem Flansch, insbesondere dessen Umfang, hervorsteht.

15. System nach einem der Ansprüche 12 bis 14, **dadurch gekennzeichnet, dass** zwischen dem Wandbereich (6) und dem Verbindungsbereich (4) ein Hals (3) vorgesehen ist.

## Claims

1. Cartridge receptacle (10) having a diluent, in particular water, inflow (15), a mixing chamber (13) in which the diluent and a beverage substrate and/or foodstuff substrate are mixed, and an outflow (11), wherein the cartridge receptacle (10) has a fastening and/or securing ring (21), **characterized in that** the fastening and/or securing ring (21) is provided with a predetermined breaking point and/or predetermined deformation point (22) at the mixing chamber.

2. Cartridge receptacle (10) according to Claim 1, wherein, with regard to the direction of flow of the diluent, the flow cross section is first expanded and then reduced again.

3. Cartridge receptacle (10) according to either of the preceding claims, wherein the mixing chamber (13) has a protuberance.

4. Cartridge receptacle (10) according to Claim 3, **characterized in that** the outflow (11) is provided in the protuberance.

5. Cartridge receptacle (10) according to one of the preceding claims, **characterized in that** at least one mixing element is provided in the mixing chamber (13) .

6. Cartridge receptacle (10) according to one of the preceding claims, **characterized in that** the cartridge receptacle (10) has a piercing means (16) which perforates the membrane (14).

7. Cartridge receptacle (10) according to Claim 6, wherein the cartridge receptacle (10) has a spike guide (32) and the piercing means (16) is mounted in a displaceable manner within the spike guide (32), wherein the piercing means (16) is displaceable between a retracted position, in which the piercing means (16) is away from the membrane (14), and an extended position, in which the piercing means (16) pierces the membrane (14) of the cartridge (1) and projects into the cartridge (1).

8. Cartridge receptacle (10) according to Claim 7, wherein at least one lateral channel (71) for conveying the beverage substrate and/or foodstuff substrate in the direction of the mixing chamber (8) when the membrane (14) is pierced by the piercing means (16) has been introduced into the outer wall of the piercing means (16).

9. Cartridge receptacle (10) according to Claim 8, wherein a compressed-air line (34) is integrated into the piercing means (16), and wherein a compressed-air connection of the compressed-air line (34) for connecting to a compressed-air source is formed on a side of the piercing means (16) that is remote from the cartridge (1), said compressed-air connection being accessible in particular from outside the cartridge receptacle (10), and wherein a compressed-air outlet of the compressed-air line (34) for blowing the compressed air into the cartridge (1) is formed on a side of the piercing means (16) that faces the cartridge (1).

10. Cartridge receptacle (10) according to one of the preceding claims, **characterized in that** the inflow (15) and the outflow (11) are provided at opposite ends of the cartridge receptacle (10).

11. Cartridge receptacle according to one of Claims 7 to 10, **characterized in that** the piercing means (16) is provided in a manner aligned with the inflow (15) and the outflow (11).

12. System having a cartridge receptacle (10) according to one of the preceding claims on/in which a cartridge (1) is provided, said cartridge (1) having a wall region (6), one end of which is adjoined by a connecting region (4) which is closed, in particular by a membrane (14), and at the opposite end of which optionally a bottom region (7) is provided, wherein the wall region and optionally the bottom region define a cavity which accommodates a beverage substrate and/or foodstuff substrate.

13. System according to Claim 12, **characterized in that** the connecting region (4) has a flange (5) which is provided with a positioning means and/or covering means (8).

14. System according to Claim 13, **characterized in that** the positioning means and/or covering means (8) is an indentation and/or protuberance which protrudes from the flange, in particular the circumference thereof.

15. System according to one of Claims 12 to 14, **characterized in that** a neck (3) is provided between the wall region (6) and the connecting region (4).

## Revendications

1. Logement de cartouche (10) comprenant une arrivée d'agent de dilution, en particulier d'eau (15), une chambre de mélange (13) dans laquelle l'agent de dilution et un substrat de boisson et/ou d'aliment sont mélangés, et une sortie (11), dans le logement de cartouche (10) présente une bague de fixation et/ou d'arrêt (21),
**caractérisé en ce que** la bague de fixation et/ou d'arrêt (21) est dotée d'un point de rupture imposée et/ou de déformation imposée (22) au niveau de la chambre de mélange.

2. Logement de cartouche (10) selon la revendication 1, dans lequel la section transversale d'écoulement s'élargit tout d'abord puis diminue à nouveau par rapport au sens d'écoulement de l'agent de dilution.

3. Logement de cartouche (10) selon l'une quelconque des revendications précédentes, dans lequel la chambre de mélange (13) présente un renflement.

4. Logement de cartouche (10) selon la revendication 3, **caractérisé en ce que** la sortie (11) est prévue dans le renflement.

5. Logement de cartouche (10) selon l'une quelconque des revendications précédentes, **caractérisé en ce qu'**au moins un élément de mélange est prévu dans la chambre de mélange (13).

6. Logement de cartouche (10) selon l'une quelconque des revendications précédentes, **caractérisé en ce que** le logement de cartouche (10) présente un moyen de perçage (16) qui perfore la membrane (14).

7. Logement de cartouche (10) selon la revendication 6, dans lequel le logement de cartouche (10) présente un guide de pointe (32), et le moyen de perçage (16) est monté mobile à l'intérieur du guide de pointe (32), le moyen de perçage (16) étant mobile entre une position rentrée dans laquelle le moyen de perçage (16) est espacé de la membrane (14) et une position sortie dans laquelle le moyen de perçage (16) transperce la membrane (14) de la cartouche (1) et fait saillie jusque dans la cartouche (1).

8. Logement de cartouche (10) selon la revendication 7, dans lequel au moins un canal latéral (71) servant à guider le substrat de boisson et/ou d'aliment en direction de la chambre de mélange (8) lorsque la membrane (14) est transpercée par le moyen de perçage (16) est ménagé dans la paroi extérieure du moyen de perçage (16).

9. Logement de cartouche (10) selon la revendication 8, dans lequel une conduite d'air comprimé (34) est intégrée dans le moyen de perçage (16), et dans lequel, sur un côté du moyen de perçage (16), détourné de la cartouche (1), un raccord d'air comprimé, en particulier accessible depuis l'extérieur du logement de cartouche (10), de la conduite d'air comprimé (34) est réalisé pour la liaison à une source d'air comprimé, et dans lequel, sur un côté du moyen de perçage (16), tourné vers la cartouche (1), une sortie d'air comprimé de la conduite d'air comprimé (34) est réalisée pour injecter de l'air comprimé dans la cartouche (1).

10. Logement de cartouche (10) selon l'une quelconque des revendications précédentes, **caractérisé en ce que** l'arrivée (15) et la sortie (11) sont prévues à des extrémités opposées du logement de cartouche (10).

11. Logement de cartouche selon l'une quelconque des revendications 7 à 10, **caractérisé en ce que** le moyen de perçage (16) est prévu en alignement avec l'arrivée (15) et la sortie (11).

12. Système comprenant un logement de cartouche (10) selon l'une des revendications précédentes sur/dans lequel est prévue une cartouche (1) qui comprend une région de paroi (6) à l'une des extrémités de laquelle se raccorde une région de liaison (4) qui est fermée, en particulier par une membrane (14), et à l'extrémité opposée de laquelle est prévue éventuellement une région de fond (7), dans lequel la région de paroi et éventuellement la région de fond définissent une cavité qui reçoit un substrat de boisson et/ou d'aliment.

13. Système selon la revendication 12, **caractérisé en ce que** la région de liaison (4) comprend un rebord (5) qui est doté d'un moyen de positionnement et/ou d'un moyen de recouvrement (8).

14. Système selon la revendication 13, **caractérisé en ce que** le moyen de positionnement et/ou le moyen de recouvrement (8) correspondent à un creux et/ou à un renflement qui font saillie à partir du rebord, en particulier à partir de sa périphérie.

15. Système selon l'une quelconque des revendications 12 à 14, **caractérisé en ce qu'**un col (3) est prévu entre la région de paroi (6) et la région de liaison (4) .
